# DEMANDE DE BREVET EUROPEEN

(11) **EP 1 672 223 A2**
(43) Date de publication de la demande: **21.06.2006**
(21) Numéro de dépôt: 05292626.8
(22) Date de dépôt: 09.12.2005
(51) Int. Cl.: F04D 29/56, F01D 17/16

(54) **Turbomachine à stator comportant un étage d'aubes de redresseur actionnées par une couronne rotative à centrage automatique**

(30) Priorité: 16.12.2004 FR 0413387
(71) Demandeur: SNECMA, 75015 Paris (FR)
(72) Inventeur: Bouru, Michel André, 77950 Montereau sur le Jard (FR)
(74) Mandataire: Barbin le Bourhis, Joel

(57) **Abrégé**

Etage d'aubes de redresseur à calage variable, lesdites aubes étant déplacées par une couronne d'actionnement rotative à centrage automatique.

Le carter (11) comporte un rail annulaire (24) coaxial fixe, faisant saillie de sa surface externe et on prévoit trois équipages mobiles (26) espacés circonférenctiellement et assujettis à se déplacer le long dudit rail, chaque équipage mobile étant couplé à la couronne par un agencement de guidage radial.

## Description

L'invention se rapporte à une turbomachine dont le stator comporte au moins un étage d'aubes de redresseur à calage variable, agencé dans un carter, lesdites aubes étant déplacées par une couronne d'actionnement rotative, extérieure au carter et portée par lui. Elle concerne un perfectionnement de ce type de couronne permettant notamment le centrage automatique de celle-ci en toute circonstance avec un jeu fonctionnel très faible. L'invention s'applique notamment au domaine des réacteurs d'avions et plus particulièrement à un compresseur que comporte un tel réacteur.

Dans une turbomachine du genre spécifié ci-dessus, un stator de compresseur est équipé d'au moins un étage d'aubes de redresseur à calage variable, la position des aubes dans la veine étant ajustable. Plus précisément, l'angle d'attaque des aubes peut être contrôlé en fonction des conditions de fonctionnement par un système d'asservissement qui commande le déplacement d'une couronne d'actionnement rotative, extérieure au carter et reliée auxdites aubes par des biellettes respectives.

Classiquement, une telle couronne d'actionnement comporte des patins de centrage, réglables radialement, par lesquels elle est positionnée autour du carter, en application sur celui-ci. Chaque patin de centrage s'applique sur une piste du carter, c'est-à-dire sur un bossage défini à la surface de celui-ci, les bossages étant usinés pour que leurs surfaces de contact s'inscrivent sur une surface cylindrique dont l'axe coïncide avec celui de la turbomachine.

Les réglages permettant d'assurer une coaxialité satisfaisante de la couronne sont difficiles et requièrent du temps. De plus, une fois ce réglage effectué, il faut redonner du jeu à l'assemblage coulissant, entre lesdits patins et lesdits bossages, pour tenir compte de l'évolution des dimensions dues aux variations de températures, en fonctionnement. Ce jeu nécessaire de l'ordre de 0,7 à 0,8 mm va à l'encontre du centrage souhaité.

Selon une autre conception, le brevet américain 4 130 375 décrit une couronne d'actionnement à déplacement simplement circulaire composée de deux anneaux superposés. L'anneau intérieur est monté sur le carter au moyen de plots s'étendant radialement et l'anneau extérieur, rattaché à des biellettes d'actionnement des aubes, roule sur l'anneau intérieur grâce à des galets. Un tel système est lourd et encombrant, toutes choses égales par ailleurs.

L'invention apporte une amélioration notable en comparaison des solutions antérieures mentionnées ci-dessus.

Plus précisément, l'invention concerne un étage d'aubes de redresseur à calage variable, comportant des aubes agencées dans un carter, lesdites aubes étant déplacées par une couronne d'actionnement extérieure audit carter et portée par celui-ci et ladite couronne étant liée par des biellettes aux aubes dudit étage pour les actionner simultanément, caractérisé en ce que ledit carter comporte un rail annulaire coaxial, fixe, faisant saillie de sa surface externe, en ce qu'au moins trois équipages mobiles espacés circonférentiellement sont assujettis à se déplacer le long dudit rail et en ce que chaque équipage mobile est couplé à ladite couronne par un agencement de guidage radial.

La structure conforme à l'invention permet d'obtenir une couronne d'actionnement de faible masse, parfaitement coaxiale et dépourvue de tout jeu fonctionnel de dilatation. De plus, le montage et les réglages sont très simples et rapides.

Le système conforme à l'invention garantit en permanence la qualité initiale du centrage, quelle que soit la température et quels que soient les matériaux utilisés pour l'anneau et le carter. On améliore aussi la maîtrise de la position de la couronne d'entraînement dans toutes les phases de la commande. Les risques de gauchissement de la couronne, antérieurement dus à une mauvaise homogénéité dans la transmission des efforts de commande, sont fortement réduits.

Le système proposé se satisfait de trois (minimum) à quatre équipages mobiles précités, sensiblement équidistants les uns des autres, circonférentiellement.

Les efforts de manoeuvre seront fortement diminués de la part imputable aux frottements des patins de centrage selon l'art antérieur, qui représentait environ 30 % de l'effort global de manoeuvre. Le gain obtenu peut se répercuter sur le dimensionnement du ou des vérins de commande ou de tout autre dispositif de commande.

Par rapport au système décrit dans le brevet américain précité, il est remarquable que la masse et les dimensions de la couronne de manoeuvre sont fortement réduites puisque l'anneau intérieur du système décrit dans ce brevet est supprimé.

Selon un mode de réalisation possible, le rail est composé de deux anneaux parallèles solidaires dudit carter et les équipages mobiles sont agencés pour se déplacer entre ces deux anneaux.

Par exemple, les deux anneaux sont pourvus de nervures latérales en vis-à-vis et les équipages mobiles comportent des galets biconiques en engagement avec ces nervures latérales.

Selon un mode de réalisation, chaque équipage mobile comporte un support entourant ladite couronne et les galets sont montés en rotation libre sur ce support.

Pour chaque équipage mobile, ledit agencement de guidage radial comporte un élément engagé radialement dans un perçage de ladite couronne, ledit élément étant porté par ledit équipage mobile. La couronne coulisse librement radialement le long dudit élément, sans jeu circonférentiel notable. Par exemple, l'élément comporte une tige solidaire du support, entourée d'une douille antifriction logée dans ledit perçage radial de la couronne. La douille antifriction peut aussi être remplacée par une cage de roulement tubulaire (exemple : cage à billes) ou de préférence par un système à recirculation de billes.

Selon une autre variante, ledit rail est composé d'un unique anneau solidaire dudit carter et chaque équipage mobile comporte des éléments de guidage en contact latéral dudit rail, de part et d'autre de celui-ci, de préférence par l'intermédiaire de moyens de roulement.

L'invention concerne aussi un compresseur muni d'un étage d'aubes tel que défini ci-dessus ainsi qu'une turbomachine comportant au moins un tel redresseur.

L'invention sera mieux comprise et d'autres avantages de celle-ci apparaîtront plus clairement à la lumière de la description qui va suivre illustrant un mode de réalisation complet et quelques variantes, donnée uniquement à titre d'exemples et faite en référence aux dessins annexés, dans lesquels :
- la figure 1 est une vue suivant une section du carter, perpendiculairement à l'axe de la turbomachine et montrant le montage de la couronne d'actionnement autour dudit carter ;
- la figure 2 est une vue de détail en perspective de la couronne d'actionnement montée sur le carter ;
- la figure 3 est une vue selon une coupe III-III de la figure 2 ;
- la figure 4 est une coupe partielle IV-IV de la figure 2 ;

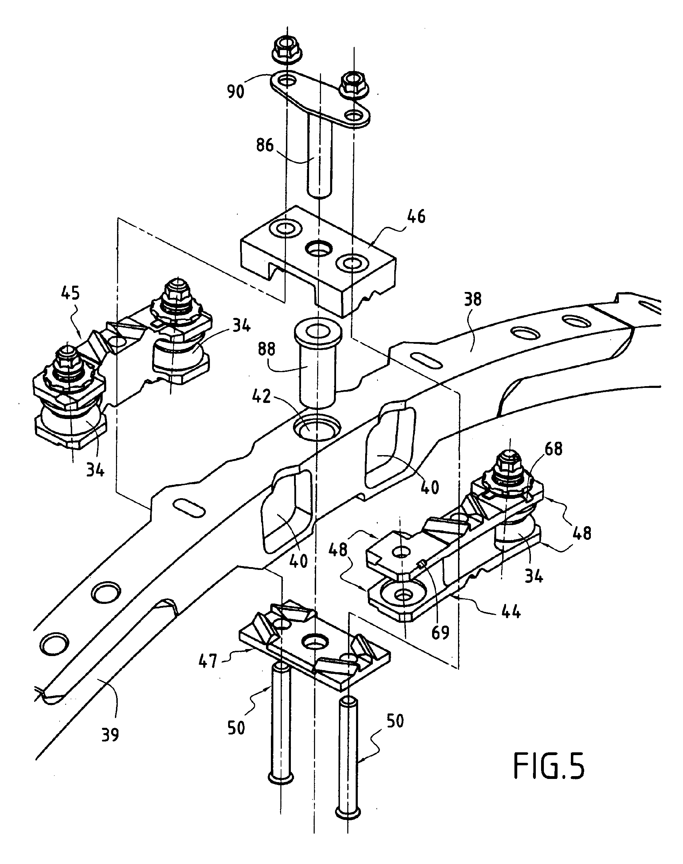

- la figure 5 est une vue partielle éclatée d'un équipage mobile autour de la couronne ; et
- les figures 6 à 8 sont des vues semblables à la figure 2, illustrant des variantes.

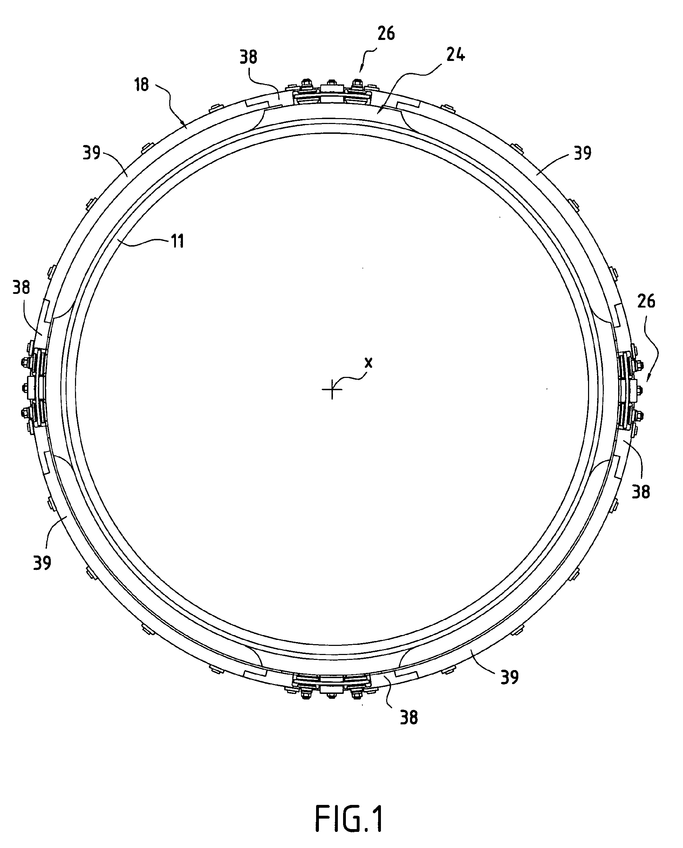

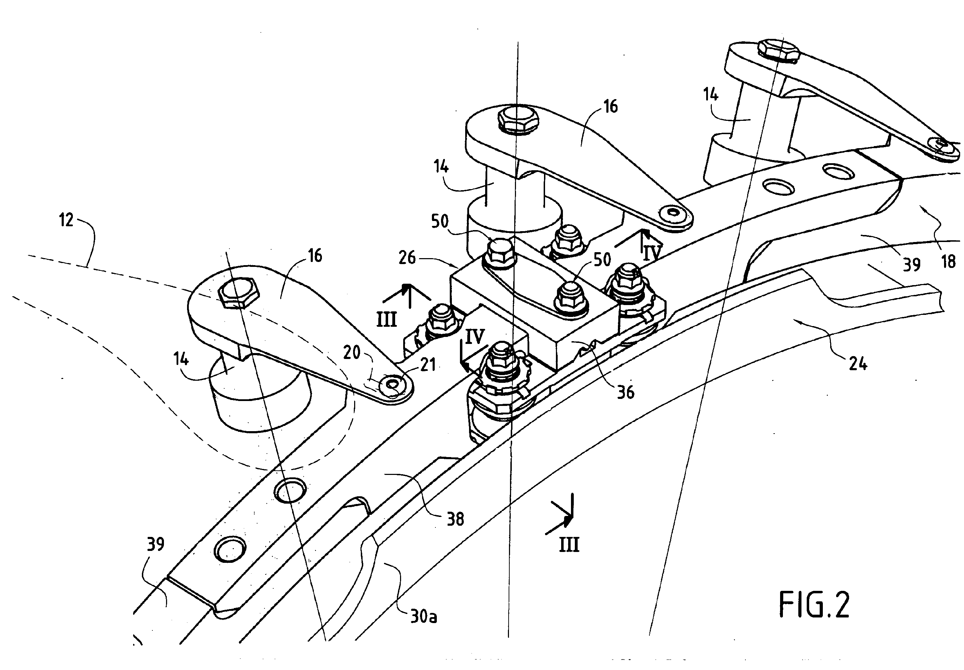

En considérant plus particulièrement les figures 1 à 4, on distingue le carter 11 d'une turbomachine, d'axe X, lequel abrite des aubes de redresseurs 12 à calage variable dont l'une est visible sur la figure 2. Chaque aube comporte un pivot 14 faisant saillie du carter, relié par une biellette 16 à une couronne d'actionnement 18 extérieure au carter. Les trous 20 d'orientation radiale pratiqués dans la couronne et dans lesquels sont engagés les tenons 21 solidaires des extrémités des biellettes sont oblongs puisque le déplacement de ladite couronne est une simple rotation. On comprend que la rotation de la couronne d'actionnement, circonférentiellement, fait pivoter simultanément les aubes 12 dans le carter, d'une même valeur. Ainsi, lorsque l'invention s'applique à un réacteur d'avion, l'orientation des aubes peut être ajustée en fonction des conditions de vol. L'invention a principalement pour but d'assurer un très bon centrage de la couronne d'actionnement 18 avec un jeu fonctionnel très faible, ce centrage n'étant pas perturbé par des différences de dilatation entre le carter et la couronne.

Pour ce faire, le carter comporte, extérieurement, un rail annulaire coaxial 24 fixe, ici d'un seul tenant avec la paroi du carter et faisant saillie de sa surface extérieure. Au moins trois équipages mobiles 26 espacés circonférentiellement et de préférence sensiblement équidistants les uns des autres, sont assujettis à se déplacer le long de ce rail. Ce dernier n'est matérialisé dans sa totalité que sur les tronçons où il est fonctionnellement utile (voir figure 1), c'est-à-dire le long des trajets des équipages mobiles 26. Le rail est arasé sur les autres tronçons, ce qui représente un gain de poids appréciable et facilite la mise en place des équipages mobiles. En outre, comme on le verra plus loin, chaque équipage mobile 26 est couplé à la couronne par un agencement de guidage radial 28 assurant un centrage automatique parfait de la couronne 18 par rapport à l'axe de la turbomachine. Dans l'exemple, on a prévu quatre équipages mobiles 26 régulièrement espacés à 90° les uns des autres, chacun portant un agencement de guidage radial 28.

Selon l'exemple présentement décrit, le rail 24 est composé de deux anneaux 30a, 30b parallèles solidaires du carter (en fait des tronçons d'anneaux) et les équipages mobiles 26 sont conformés pour se déplacer entre ces anneaux, plus précisément entre ces tronçons d'anneaux, respectivement. De plus, les deux anneaux 30a, 30b sont pourvus de nervures latérales 32a, 32b en vis-à-vis et les équipages mobiles comportent des galets biconiques 34 en engagement roulant avec lesdites nervures latérales. De plus, chaque équipage mobile 26 comporte un support 36 entourant ladite couronne. Les galets sont montés en rotation libre sur ce support.

Dans l'exemple, chaque équipage mobile 26 comporte quatre galets biconiques 34 coopérant deux à deux avec les deux nervures 32a, 32b, respectivement. Le support 36 entoure la couronne et les galets 34 sont montés en rotation libre sur ce support. La couronne est composée de l'assemblage de plusieurs tronçons courbes 38, 39 munis de méplats à leurs extrémités et fixés bout à bout, par exemple par sertissage ou boulonnage, pour reconstituer une structure annulaire. Chaque tronçon 38 portant un équipage mobile 26 présente deux cavités 40 à l'intérieur desquelles s'engagent partiellement les galets et des parties du support 36. Un perçage radial 42 s'étend entre les deux cavités pour recevoir ledit agencement de guidage radial 28 qui sera décrit plus loin.

L'équipage mobile 26 est réalisé par l'assemblage de deux platines latérales 44, 45 et de deux plaques 46, 47, respectivement une plaque supérieure 46 s'étendant au-dessus de la couronne (c'est-à-dire radialement à l'extérieur de celle-ci) et une plaque inférieure 47 s'étendant entre ladite couronne et le carter. Les platines latérales 44, 45 définissent chacune les chapes 48 de maintien de deux galets 34, en prise avec la même nervure 30a, 30b du rail. Les chapes des platines sont en regard des cavités 40 pratiquées dans la couronne.

Les platines 44, 45 et les plaques 46, 47 comportent des nervures et rainures en V qui s'emboîtent les unes dans les autres au montage et par lesquelles elles se positionnent entre elles avec précision, en entourant la couronne 18. L'assemblage ne nécessite que deux boulons 50 engagés dans des perçages correspondant desdites platines et plaques. Les deux boulons 50 s'étendent de part et d'autre de la couronne 18, radialement.

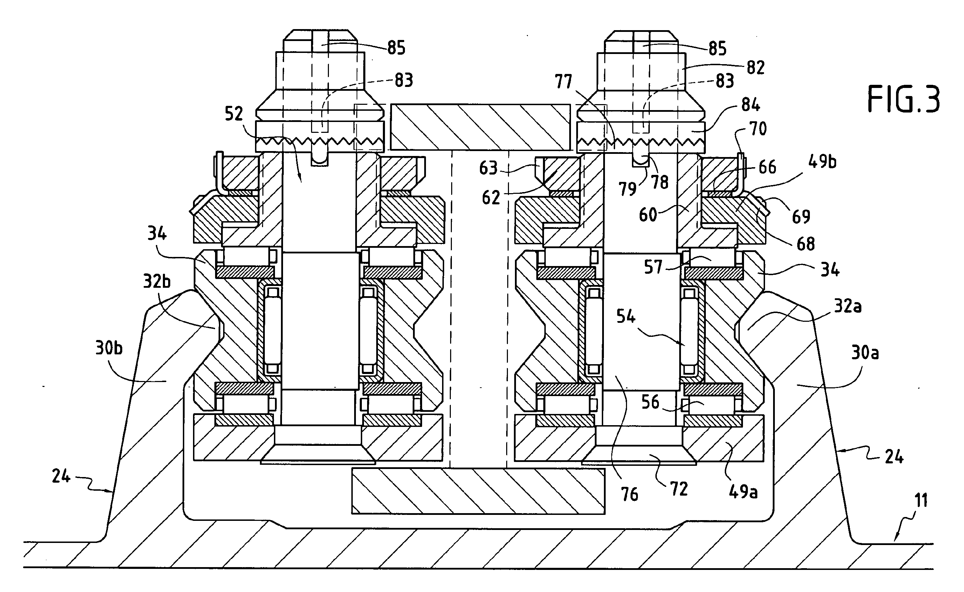

La figure 3 permet de mieux distinguer le montage des galets 34 sur l'équipage mobile.

Chaque galet 34 est monté sur un élément formant moyeu 52, solidaire du support 36. Cet élément est installé entre les deux branches 49a, 49b de la chape 48 correspondante de la platine latérale. Il s'étend sensiblement radialement par rapport au carter.

Un moyen de roulement 54, ici un roulement à aiguilles est intercalé entre ledit élément formant moyeu 52 et le galet 34. Une butée à aiguilles 56 est intercalée entre la branche de chape inférieure 49a et le galet 34. Une autre butée à aiguilles 57 est intercalée entre le galet 34 et la branche de chape supérieure 49b. Les termes "inférieur" et "supérieur" sont employés ici par commodité en référence à la position des éléments tels que représentés sur la figure 3. La piste supérieure de la butée à aiguilles 57 se prolonge par un manchon fileté 60 vissé dans la branche de chape supérieure 49b. La position de ce manchon 60 peut être réglée pour ajuster le jeu fonctionnel des butées à aiguilles. La position de ladite piste supérieure est stabilisée par le serrage d'un contre-écrou 62 à encoches périphériques 63. Une rondelle 66 munie de pattes est intercalée entre le contre-écrou 62 et la branche de chape supérieure 49b. Elle permet d'immobiliser le contre-écrou en rotation après positionnement du manchon et serrage du contre-écrou. Pour ce faire, une patte 68 est rabattue dans une encoche 69 de ladite branche de chape supérieure et une autre patte 70 est rabattue dans l'une des encoches périphériques du contre-écrou. L'extrémité inférieure dudit élément formant moyeu comporte une partie élargie 72 (tronconique) en butée contre la branche de chape inférieure 49a.

D'autre part, ledit élément formant moyeu 52 est muni d'une une partie 76 légèrement excentrée par rapport à deux autres parties par lesquelles il est fixé au support. Le galet biconique 34 est monté en rotation sur cette partie excentrée, ici par l'intermédiaire du roulement à aiguilles.

La position angulaire de montage dudit élément formant moyeu 52 est ajustable pour permettre un réglage de jeu entre ledit galet 34 et ledit rail 24.

Plus précisément, une rondelle crantée 77 comporte un ergot 78 engagé dans une encoche 79 du manchon 60. Elle est ainsi immobilisée en rotation par rapport au support 36. L'élément formant moyeu 52 la traverse et se termine par un tronçon fileté sur lequel est vissé un écrou à jupe 82. Une autre rondelle crantée 84 est intercalée entre ledit écrou à jupe 82 et la rondelle crantée 77. Les crantages radiaux des rondelles s'imbriquent les uns dans les autres. La rondelle crantée 84 comporte un ergot interne 83 engagé dans une rainure longitudinale 85 pratiquée le long de la partie d'extrémité supérieure dudit élément formant moyeu 52 de sorte qu'il est solidaire en rotation de celui-ci. Ainsi, on peut régler la position de l'excentrique portant le galet biconique 34 pour ajuster la position de ce dernier par rapport au rail. Cette position étant déterminée, le serrage de l'écrou 82 imbrique les rondelles crantées l'une dans l'autre et stabilise le réglage.

Par ailleurs, comme mentionné précédemment, chaque équipage mobile 26 porte un agencement de guidage radial 28 de ladite couronne. Celui-ci comporte ici un élément 86 engagé radialement dans le perçage radial 42 de la couronne situé entre les deux cavités 40. Cet élément est porté par l'équipage mobile. Il est constitué d'un axe de guidage, radial, traversant les deux plaques 46, 47 de l'équipage mobile et engagé dans une douille antifriction 88 positionnée dans le perçage radial 42 de la couronne. L'axe de guidage est engagé dans la douille ; il est fixé à une plaque 90 elle-même serrée par les écrous des deux boulons 50 qui assurent l'assemblage des platines 44, 45 et des plaques 46, 47. La douille antifriction 88 peut être remplacée par une cage de roulement tubulaire (exemple : cage à billes) ou de préférence par un système à recirculation de billes.

En fonctionnement, les variations de températures qui induisent des variations relatives de diamètre entre le carter 11 et la couronne 18, sont sans conséquence sur le centrage de celle-ci par rapport à l'axe x de la turbomachine. En effet, les agencements de guidage radial 28 permettent des variations de diamètre entre le carter et la couronne sans affecter le centrage de celle-ci dès lors que lesdits agencements de guidage radial sont au moins au nombre de trois et espacés circonférentiellement. Par ailleurs, les variations de températures n'affectent pas le roulement des galets 34 le long du rail annulaire 24 du carter.

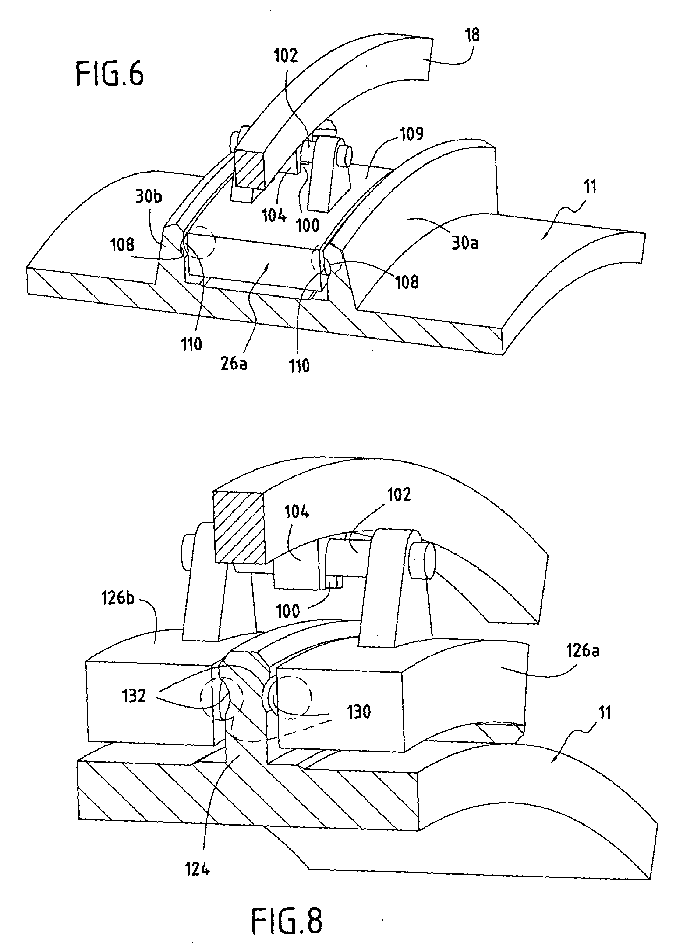

Les figures 6 à 8 illustrent d'autres variantes où les éléments analogues portent les mêmes références numériques.

Selon ces modes de réalisation, pour chaque équipage mobile, ledit agencement de guidage radial comporte une lumière radiale 100 pratiquée sur une partie de la hauteur de ladite couronne 18 et dans laquelle est engagée, à coulissement doux, (c'est-à-dire sans jeu circonférentiel) une tige 102 orientée parallèlement à l'axe de rotation x, laquelle est portée par l'équipage mobile. Des moyens de roulement peuvent être intercalés entre la tige 102 et ladite lumière radiale 100, pour améliorer la qualité du guidage radial.

La lumière radiale 100 est ici réalisée dans un prolongement radial intérieur 104 de la couronne 18, pour alléger cette dernière.

Sur la figure 6, les deux anneaux 30a, 30b du rail sont pourvus de rainures latérales 108 en vis-à-vis et chaque équipage mobile 26a comporte une embase 109 s'étendant entre les deux anneaux. Les champs de cette embase faisant face auxdits anneaux comportent des éléments de roulement 110 engagés dans lesdites rainures latérales. Dans l'exemple, ces éléments de roulement sont des billes. Avantageusement, l'embase peut renfermer deux circuits à circulation de billes. La tige 102 est portée en chape par cette embase 109.

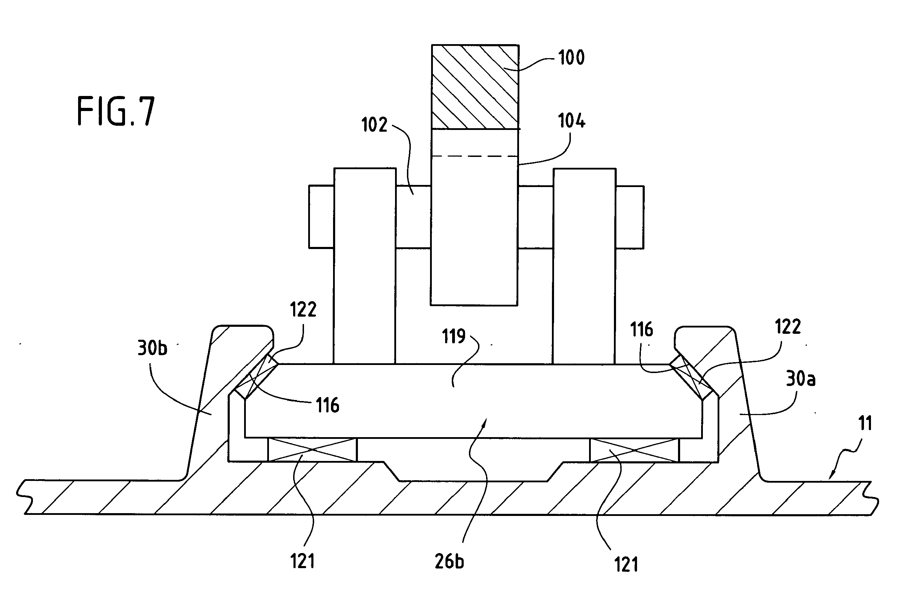

Selon un autre mode de réalisation (figure 7), les deux anneaux 30a, 30b sont pourvus de surfaces tronconiques 116 en vis-à-vis et chaque équipage mobile 26b comporte une embase 119 s'étendant entre les deux anneaux. Le glissement est assuré par des patins de contact en matériau antifriction. On distingue des patins 121, portés par la face inférieure de l'embase et des patins 122 portés par ses deux champs qui font face aux anneaux 30a, 30b. Ces patins coopèrent respectivement avec la surface extérieure du carter 11 entre les deux anneaux, et avec les surfaces tronconiques 116. Inversement, les patins antifriction peuvent être disposés le long des faces latérales des anneaux et le long de la surface extérieure du carter. Dans ce cas, la longueur des patins dans le sens circonférentiel est augmentée pour tenir compte de la course de rotation de la couronne.

Selon encore un autre mode de réalisation (figure 8), le rail 124 est cette fois composé d'un unique anneau solidaire dudit carter et chaque équipage mobile comporte des éléments de guidage 126a, 126b en contact latéral dudit rail, de part et d'autre de celui-ci. De préférence, des moyens de roulement 130 sont interposés entre les éléments de guidage 126a, 126b et le rail 124. Dans l'exemple plus spécifiquement décrit, l'anneau comporte deux gorges latérales annulaires 132 opposées, chaque élément de guidage comportant des moyens de roulement 130 engagés dans ces gorges. Les éléments de roulement sont ici des billes.

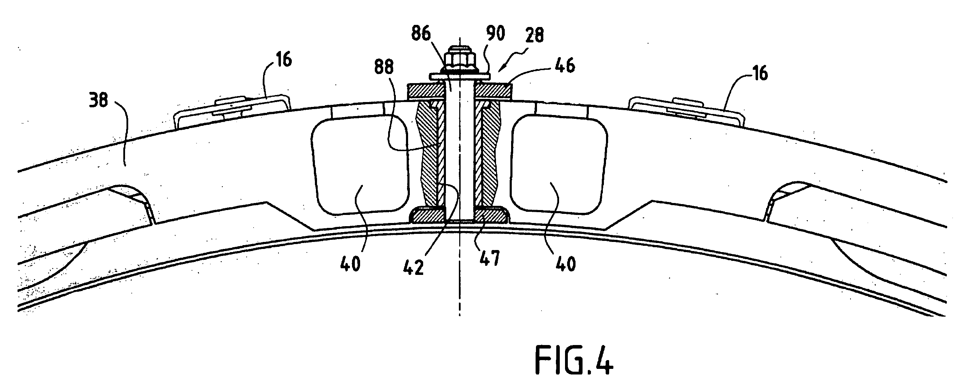

Selon encore une autre variante possible, les douilles antifriction 88 peuvent être remplacées par des rotules montées sur les tiges 86. Cette variante est avantageuse dans le cas où les déformations de la couronne seraient importantes au point de ne pouvoir être absorbées par le système décrit en référence à la figure 4.

## Revendications

1. Etage d'aubes de redresseur à calage variable, comportant des aubes agencées dans un carter (11), lesdites aubes étant déplacées par une couronne d'actionnement (18) extérieure audit carter et portée par celui-ci et ladite couronne étant liée par des biellettes (16) aux aubes dudit étage pour les actionner simultanément, **caractérisé en ce que** ledit carter (11) comporte un rail annulaire (24) coaxial, fixe, faisant saillie de sa surface externe, **en ce qu'**au moins trois équipages mobiles (26) espacés circonférentiellement sont assujettis à se déplacer le long dudit rail et **en ce que** chaque équipage mobile est couplé à ladite couronne par un agencement de guidage radial (28).

2. Etage d'aubes selon la revendication 1, **caractérisé en ce que** ledit rail est composé de deux anneaux parallèles (30a, 30b) solidaires dudit carter et **en ce que** les équipages mobiles (26) sont conformés pour se déplacer entre ces anneaux.

3. Etage d'aubes selon la revendication 2, **caractérisé en ce que** les deux anneaux sont pourvus de nervures latérales (32a, 32b) en vis-à-vis et **en ce que** les équipages mobiles comportent des galets biconiques (34) en engagement avec lesdites nervures latérales.

4. Etage d'aubes selon la revendication 3, **caractérisé en ce que** chaque équipage mobile (26) comporte un support (36) entourant ladite couronne et **en ce que** lesdits galets sont montés en rotation libre sur ce support.

5. Etage d'aubes selon la revendication 4, **caractérisé en ce que** chaque galet est monté sur un élément formant moyeu (52), solidaire dudit support, s'étendant sensiblement radialement par rapport audit carter.

6. Etage d'aubes selon la revendication 5, **caractérisé en ce qu'**un moyen de roulement (54) est intercalé entre ledit élément formant moyeu et ledit galet.

7. Etage d'aubes selon la revendication 5 ou 6, **caractérisé en ce que** ledit élément formant moyeu est muni d'une partie (76) excentrée par rapport à deux parties d'extrémité par lesquelles il est fixé audit support, **en ce que** le galet (34) est monté en rotation sur cette partie excentrée et **en ce que** la position angulaire de montage dudit élément formant moyeu sur ledit support est ajustable pour permettre un réglage de jeu entre ledit galet et ledit rail.

8. Etage d'aubes selon la revendication 2, **caractérisé en ce que** les deux anneaux (30a, 30b) sont pourvus de rainures latérales (108) en vis-à-vis, **en ce que** chaque équipage mobile comporte une embase (109) s'étendant entre les deux anneaux et **en ce que** les champs de cette embase faisant face auxdits anneaux comportent des éléments de roulement (110) engagés dans lesdites rainures latérales.

9. Etage d'aubes selon la revendication 2, **caractérisé en ce que** les deux anneaux sont pourvus de surfaces tronconiques (116) en vis-à-vis, **en ce que** chaque équipage mobile comporte une embase (119) s'étendant entre les deux anneaux et **en ce que** la face inférieure de cette embase et ses champs faisant face auxdits anneaux portent des patins de contact (121, 122) en matériau antifriction, coopérant respectivement avec la surface extérieure du carter, entre les deux anneaux et avec lesdites surfaces tronconiques.

10. Etage d'aubes selon la revendication 1, **caractérisé en ce que** ledit rail est composé d'un unique anneau (124) solidaire dudit carter et **en ce que** chaque équipage mobile comporte des éléments de guidage (126a, 126b) en contact latéral dudit rail, de part et d'autre de celui-ci, de préférence par l'intermédiaire de moyens de roulement (110).

11. Etage d'aubes selon la revendication 10, **caractérisé en ce que** ledit anneau (124) comporte deux gorges latérales annulaires (132) opposées, chaque équipage mobile comportant des moyens de roulement engagés dans ces gorges, de préférence un système à recirculation de billes.

12. Etage d'aubes selon l'une des revendications précédentes, **caractérisé en ce que**, pour chaque équipage mobile, ledit agencement de guidage radial comporte un élément (86) engagé radialement dans un perçage de ladite couronne, ledit élément étant porté par ledit équipage mobile.

13. Etage d'aubes selon la revendication 12, **caractérisé en ce que** ledit élément comporte une tige et **en ce que** cette tige est entourée d'une douille antifriction (88) ou d'une cage de roulements tubulaire, de préférence, du type à recirculation de billes.

14. Etage d'aubes selon la revendication 12, **caractérisé en ce que**, pour chaque équipage mobile, ledit agencement de guidage radial comporte une lumière radiale (100) pratiquée sur une partie de la hauteur de ladite couronne, dans laquelle est engagée à coulissement sans jeu circonférentiel une tige (102) orientée parallèlement à l'axe de rotation et portée par ledit équipage mobile.

15. Etage d'aubes selon la revendication (14), **caractérisé en ce que** des moyens de roulement sont intercalés entre ladite tige et ladite lumière radiale.

16. Compresseur muni d'au moins un étage d'aubes de redresseur à calage variable selon l'une des revendications précédentes.

17. Turbomachine comportant au moins un compresseur selon la revendication 16.
